# EUROPÄISCHE PATENTSCHRIFT

(11) **EP 1 083 182 B1**
(45) Veröffentlichungstag und Bekanntmachung des Hinweises auf die Patenterteilung: **23.04.2003**
(21) Anmeldenummer: 00116181.9
(22) Anmeldetag: 02.08.2000
(51) Int. Cl.: C08B 11/12

(54) **Verfahren zur Herstellung von Carboxymethylcellulose**
Process for the production of carboxymethylcellulose
Procédé pour la préparation de carboxyméthylcellulose

(30) Priorität: 13.08.1999 DE 19938501
(43) Veröffentlichungstag der Anmeldung: 14.03.2001
(73) Patentinhaber: Wolff Walsrode AG, 29655 Walsrode (DE); Friedrich-Schiller-Universität Jena, 07743 Jena (DE)
(72) Erfinder: Thielking, Heiko, 29683 Fallingbostel (DE); Koch, Wolfgang, Dr., 29699 Bomlitz (DE); Nachtkamp, Klaus, Dr., 29664 Walsrode (DE); Ondruschka, Bernd, Prof. Dr., 04109 Leipzig (DE); Nüchter, Matthias, Dr., 04347 Leipzig (DE); Heinze, Ute, Dr., 07745 Jena (DE); Klemm, Dieter, Prof. Dr., 99425 Weimbar (DE)
(74) Vertreter: Feldhues, Michael L.F., Dr.

(56) Entgegenhaltungen:
- US-A- 3 900 463
- RESEARCH DISCLOSURE OCTOBER 1988, Nr. 29426, XP000943635

## Beschreibung

Die Erfindung betrifft ein Verfahren zur Herstellung von Carboxymethylcellulose, wobei die Reaktion in diskontinuierlicher oder kontinuierlicher Reaktionsführung unter Einwirkung eines Hochfrequenzfeldes durchgeführt wird.

Veredlungsprodukte der Cellulose wie die Carboxymethylcellulosen (nachfolgend CMC genannt), sind vielseitig eingesetzte Substanzen aus nachwachsenden Rohstoffen, welche auf Grund ihrer Eigenschaften zunehmend in verschiedenen Bereichen genutzt werden. So spielen Substanzen wie CMC als Zwischenprodukte und Hilfsmittel in der Biotechnologie, der Pharmazie, der Papier- und Lebensmittelindustrie, der Kosmetik, der Medizintechnik und der Chromatographie eine zunehmend wachsende Rolle. Ein bedeutendes Einsatzgebiet für CMC als wichtigsten anionischen Celluloseether ist seine Nutzung als Bohrhilfsmittel in der Erdölförderung sowie allgemein in der Bohrtechnik.

Üblicherweise werden die hier diskutierten Carboxymethylcellulosen durch Erwärmen einer voraktivierten Cellulose mit Chloressigsäure oder deren Natriumsalz in Gegenwart von wäßriger Lauge und einem niederen Alkohol hergestellt. Daneben existieren noch eine Reihe weiterer Verfahren, welche als Modifizierungen der grundlegenden Synthesen zu betrachten sind, aber keine wirtschaftliche Rolle spielen (vgl.: "Comprehensive Cellulose Chemistry", D. Klemm, B. Philipp, Th. Heinze, U. Heinze, W. Wagenknecht, Wiley-VCH, Weinheim, 1998).

Bei der Carboxymethylierung entstehen bei Temperaturen von 50°C bis 150°C und langen Reaktionszeiten (1 bis 10 h) Gemische mit unterschiedlichen Substitutionsgraden an den einzelnen Glucosebausteinen (nachfolgend AGU = Anhydroglucoseeinheit genannt).

Die diskontinuierlichen Prozesse erfordern neben einem relativ großen Energiebedarf einen hohen verfahrenstechnischen sowie zeitlichen Aufwand. Durch die langen Reaktionszeiten sind die Reaktion und das Reaktionsprodukt kaum beeinflußbar und es wird die Bildung von Nebenprodukten (Glykolaten) gefördert, wodurch zusätzliche Reinigungsschritte notwendig werden, die den Verfahrenssaufwand weiter erhöhen.

Aufgabe der Erfindung ist die Entwicklung eines Verfahrens zur Herstellung von Carboxymethylcellulosen, welches die Herstellung bei kurzen Reaktionszeiten und mit geringem Anfall von Nebenprodukten ermöglicht.

Es wurde nun gefunden, daß bei Durchführung der Carboxymethylierungsreaktion in einem elektromagnetischen Feld bei kurzen Reaktionszeiten Produkte mit geringem Anfall der Nebenprodukte erhalten werden.

Gegenstand der Erfindung ist daher ein Verfahren zur Herstellung von Carboxymethylcellulose, bei dem
a) Cellulose aktiviert und
b) mit einem Carboxymethylierungsreagenz umgesetzt wird,
dadurch gekennzeichnet, daß Reaktionsschritt b) in einem elektromagnetischen Feld mit einer Frequenz im Bereich von 10 MHz bis 23 GHz durchgeführt wird.

Erfindungsgemäß wird die Umsetzung der aktivierten Cellulose mit einem an sich bekannten Carboxymethylierungsreagenz unter Einfluß eines elektromagnetischen Feldes mit einer Frequenz im Bereich von 10 MHz bis 23 GHz, und vorzugsweise im Bereich von 2 bis 3 GHz, besonders bevorzugt 2,45 GHz, durchgeführt. Die Dauer der Einwirkung des elektromagnetischen Feldes liegt dabei im Bereich von einer Minute bis zu 120 Minuten, vorzugsweise zwischen einer Minute und 60 Minuten.

Überraschend wurde gefunden, daß sich Cellulose unter dem Einfluß dieses Hochfrequenzfeldes in wesentlich kürzerer Zeit zu Carboxymethylcellulosen mit unterschiedlichen DS-Werten umsetzen läßt, ohne daß das Reaktionsprodukt durch die elektromagnetische Strahlung im angegebenen Frequenzbereich abgebaut wird, d.h. ohne daß eine Depolymerisation der Cellulose nachweisbar ist. Vielmehr können durch Wahl des sehr effizienten Energieeintrages, der den Energiebedarf drastisch reduziert, und durcch geeignete Auswahl der Reaktionsbedingungen, wie beispielsweise Größe dieses Energieeintrages, Druck und Reaktionstemperatur, die DS-Werte der Carboxymethylcellulosen beeinflußt und somit variiert werden.

Die Reaktion kann so durchgeführt werden, daß das Reaktionsgemisch in der Apparatur drucklos oder unter Druck bei Kontrolle von Energieeintrag, Druck und Temperatur der Hochfrequenzstrahlung ausgesetzt wird.

Bei der Durchführung des erfindungsgemäßen Verfahrens ergaben sich unerwartet kurze Reaktionszeiten und dadurch Reaktionsprodukte mit geringem Anfall an unerwünschten Nebenprodukten, so daß die bereits unmittelbar im Herstellungsprozeß mit erforderlicher Reinheit entstehenden Carboxymethylcellulosen nicht oder für den Verfahrensaufwand nur unwesentlich nachfolgenden Reinigungsschritten unterzogen werden müssen.

Dabei kann sowohl im Batchverfahren als auch kontinuierlich gearbeitet werden.

Die Reaktionsschritte werden in einem Gemisch aus einem organischen Lösungsmittel und Wasser durchgeführt. Als organische Lösungsmittel können z.B. alkohole, Ether oder Ketone verwendet werden. Als Alkohole kommen dabei niedere C₁-C₄-Alkohole oder deren Gemische, insbesondere Isopropanol, in Frage. Besonders bevorzugt ist ein Alkohol/Wasser-Gemisch mit 5-20 Gew.-% Wasser.

Durch das Vermischen mit z.B. wäßriger Alkalilösung in Reaktionsschritt a) wird die Cellulose für Reaktionsschritt b) aktiviert. Es wird wäßrige Kali- oder Natronlauge, insbesondere 10 bis 70 %ige wäßrige Natronlauge, bevorzugt 15 %ige wäßrige Natronlauge oder festes Natriumhydroxid eingesetzt. Die Alkalisierung wird üblicherweise für 1 bis 150 Minuten, insbesondere für 100 Minuten durchgeführt.

Als Carboxymethylierungsreagenzien (nachfolgend CMR genannt) werden üblicherweise Chloressigsäure oder deren Natriumsalz eingesetzt. Bevorzugt ist 80%ige Chloressigsäure.

Reaktionsschritt b) wird üblicherweise bei erhöhter Temperatur von 20 bis 150°C, insbesondere 50 bis 100°C, durchgeführt.

Erfindungsgemäß wird ein elektromagnetisches Hochfrequenzfeld mit einer Frequenz im Bereich von 10 MHz bis 23 GHz, vorzugsweise 2 bis 3 GHz, insbesondere 2,45 GHz für die Induktion des Reaktionsschrittes b) eingesetzt. Die Bestrahlungsdauer liegt üblicherweise im Bereich von 1 bis 120 insbesondere bei 1 bis 60 Minuten.

Erzeugt wird das elektromagnetische Feld in an sich bekannter Weise durch ein Magnetron. Es kann ein kommerziell erhältlicher Mikrowellen-Ofen bei der Durchführung im Batch-Verfahren eingesetzt werden.

Bei kontinuierlicher Verfahrensführung ist es u.a. auch möglich, einen Durchflußreaktor (z.B. Cont Flow®, MLS Lautkirch) dem Einfluß des elektromagnetischen Feldes auszusetzen.

Die folgenden Beispiele sollen den Gegenstand der Erfindung näher erläutern.

### Beispiele

### Beispiel 1

Eine Suspension von 1 g Fichtensulfitzellstoff in 30 ml Isopropanol wird unter Rühren mit wäßriger Natronlauge voraktiviert. Man mischt eine Stunde bei Raumtemperatur und gibt dann das Carboxymethylierungsreagenz zu. Die Reaktionsmischung wird in einem Druckbehälter mit 500 W Leistung (2,45 GHz) unter den angegebenen Bedingungen unter Rühren bestrahlt. Das Reaktionsgemisch wird nach den üblichen Methoden zur Gewinnung von Carboxymethylcellulose aufgearbeitet. In Tabelle 1 sind einige Beispiele für Reaktionen unter unterschiedlichen Bedingungen aufgeführt.

**Tabelle 1:**

| Synthese von CMC im Hochfrequenzfeld unter unterschiedlichen Bedingungen | | | | |
|---|---|---|---|---|
| Molares Verhältnis AGU^{a)}:CMR^{b)}:NaOH | Temperatur [°C] | Zeit [min] | DS^{c)} | Viskosität^{f)} [mPas] |
| 1:2^{d)}:2 | 70 | 30 | 1,2 | 1580 |
| 1:3^{d)}:2 | 70 | 60 | 1,3 | 456 |
| 1:2^{e)} : 4 | 70 | 30 | 0,85 | 164 |

| | | | | |
|---|---|---|---|---|
| ^{a)} AGU = Anhydroglucoseeinheit | | | | |
| ^{b)} CMR = Carboxymethylierungsreagenz | | | | |
| ^{c)} DS = Substitutionsgrad | | | | |
| ^{d)} Chloressigsäure-Natriumsalz | | | | |
| ^{e)} Chloressigsäure | | | | |
| ^{f)} Viskosität einer 2 %igen wäßrigen Lösung, D = 2,55 s⁻¹ | | | | |

### Beispiel 2

Eine Mischung aus 15 g Fichtensulfitzellstoff und 400 ml Isopropanol wird eine Stunde mit 40 ml 15 %iger wäßriger Natronlauge voraktiviert. Man gibt 18 g Monochloressigsäure-Natriumsalz zu und bestrahlt die Reaktionsmischung in einem Druckbehälter für 20 min mit 500 W Leistung (2,45 GHz) bei max. 55°C. Nach Abkühlen und Aufarbeitung erhält man Carboxymethylcellulose mit einem DS von 1,1.

### Beispiel 3

Eine Suspension von 1 g Fichtensulfitzellstoff in 30 ml Isopropanol wird unter Rühren mit 2,66 ml 15 %iger wäßriger Natronlauge voraktiviert. Man mischt eine Stunde bei Raumtemperatur und gibt dann 1,2 g Monochloressigsäure-Natriumsalz zu. Die Mischung wird in einem Reaktor mit 500 W Leistung bei max. 70°C unter Rühren mit einer Frequenz von 13,65 MHz bestrahlt. Das Reaktionsgemisch wird nach den üblichen Methoden zur Gewinnung von Carboxymethylcellulose aufgearbeitet. DS = 1,2.

### Beispiel 4

Eine Suspension von 1 g Carboxymethylcellulose (DS = 1,3) in 30 ml Isopropanol wird unter Rühren mit 2,66 ml 15 %iger wäßriger Natronlauge voraktiviert. Man mischt eine Stunde bei Raumtemperatur und gibt dann 1,2 g Monochloressigsäure-Natriumsalz zu. Die Mischung wird in einem Reaktor mit 500 W Leistung bei max. 70°C unter Rühren mit einer Frequenz von 2,45 GHz bestrahlt. Das Reaktionsgemisch wird nach den üblichen Methoden zur Gewinnung von Carboxymethylcellulose aufgearbeitet. DS = 2,1.

### Beispiel 5

Durch einen Durchflußreaktor wird bei einer Maximaltemperatur von 100°C, einem Druck von 20 bar, einer Leistung von 350 W (2,45 GHz) und einer mittleren Verweilzeit von etwa 10 min ein voraktiviertes Gemisch aus 100 g Perlcellulose, 3000 ml Isopropanol, 270 ml 15 %iger wäßriger Natronlauge und 120 g Monochloressigsäure-Natriumsalz gepumpt. Die Reaktionslösung wird am Reaktorende abgeschreckt, auf Raumtemperatur gekühlt und wie üblich aufgearbeitet. Der Umsatz ist quantitativ. Die entstandene Carboxymethylcellulose hat einen DS von 1,3.

### Beispiel 6

Zu einer Suspension aus 10 g Fichtensulfitzellstoff in 174 ml Isopropanol und 26 ml Wasser werden 5,2 g Natriumhydroxid gegeben und das Gemisch 30 min bei Raumtemperatur gerührt. Man gibt 9,9 g Monochloressigsäure zu und bestrahlt die Reaktionsmischung 20 min mit 500 W Leistung (2,45 GHz) bei 55 °C. Nach Abkühlen und üblicher Aufarbeitung erhält man Carboxymethylcellulose mit einem DS von 0,64 und einer Viskosität von η_{2,55 s}-1 = 1880 [mPas].

### Beispiel 7

Zu einer Suspension aus 1 g Zellstoff in 16 g Isopropanol, 1 g Methanol und 1,7 g Wasser werden 0,6 g feste Natronlauge gegeben und 80 min bei Raumtemperatur alkalisiert. Nach der Zugabe von 0,8 g 75 %iger Chloressigsäure wurde ca. eine Minute homogenisiert und anschließend vier - acht Minuten bei 240 - 500 Watt Leistung in einer haushaltsüblichen Mikrowelle umgesetzt. Nach üblicher Aufarbeitung wurden die in Tabelle 2 dargestellten Produkte erhalten:

**Tabelle 2**

| Synthese von CMC im Hochfrequenzfeld unter unterschiedlichen Bedingungen | | | |
|---|---|---|---|
| Veretherungszeit [min] | Leistung [Watt] | DS^{a)} [-] | Viskosität^{b)} [mPas] |
| 4 | 500 | 0,53 | 1730 |
| 8 | 240 | 0,73 | 3066 |
| 2x4 | 500 | 0,71 | 1406 |

| | | | |
|---|---|---|---|
| ^{a)} DS = Substitutionsgrad | | | |
| ^{b)} Viskosität einer 2%igen wäßrigen Lösung, D = 2,55 s⁻¹ | | | |

### Beispiel 8

Zu einer Suspension aus 25,9 g Cellulose in 450 ml Isopropanol, 31 ml Methanol und 36 ml Wasser werden 10,8 g Natriumhydroxid und 31,45 g Monochloressigsäure-Natriumsalz gegeben. Nach Inertisierung wird das Gemisch 30 min bei Raumtemperatur gerührt. Anschließend wird die Reaktionsmischung auf 80°C mit Mikrowellenenergie (2,45 GHz) erwärmt und bei 80°C ca. 18 min verethert. Nach Abkühlen und üblicher Aufarbeitung erhält man Carboxymethylcellulose mit einem DS = 1,13 und einer Viskosität von η_{2,55 s}⁻¹ = 17469 mPas (2 %ige wässrige Lösung).

### Beispiel 9

Zu einer Suspension aus 25,2 g Cellulose in 490 ml Isopropanol, 34 ml Methanol und 39 ml Wasser werden 8,4 g Natriumhydroxid gegeben. Nach Inertisierung wird das Gemisch 30 min bei Raumtemperatur gerührt. Nach Zugabe von 25 g Monochloressigsäure-Natriumsalz wird die Reaktionsmischung erneut inertisiert, auf 80°C mit Mikrowellenenergie (2,45 GHz) erhitzt und bei 80°C ca. 22 min verethert. Nach Abkühlen und üblicher Aufarbeitung erhält man Carboxymethylcellulose mit einem DS = 0,96 und einer Viskosität von η_{2,55 s}⁻¹ = 6079 mPas (2 %ige wässrige Lösung).

## Patentansprüche

1. Verfahren zur Herstellung von Carboxymethylcellulose, bei dem
a) Cellulose aktiviert und
b) mit einem Carboxymethylierungsreagenz umgesetzt wird,
**dadurch gekennzeichnet, daß** Reaktionsschritt b) in einem elektromagnetischen Feld mit einer Frequenz im Bereich von 10 MHz bis 23 GHz durchgeführt wird.

2. Verfahren nach Anspruch 1, **dadurch gekennzeichnet, daß** Reaktionsschritt b) in einem elektromagnetischen Feld mit einer Frequenz von 2 und 3 GHz durchgeführt wird.

3. Verfahren nach Anspruch 1 oder 2, **dadurch gekennzeichnet, daß** Reaktionsschritt b) in einem Temperaturbereich von 20°C bis 150°C gearbeitet wird.

4. Verfahren nach einem der Ansprüche 1 bis 3, **dadurch gekennzeichnet, daß** Reaktionsschritt b) für eine Reaktionsdauer von 1 bis 120 Minuten im elektromagnetischen Feld durchgeführt wird.

5. Verfahren nach einem der Ansprüche 1 bis 4, **dadurch gekennzeichnet, daß** das Verfahren diskontinuierlich durchgeführt wird.

6. Verfahren nach einem der Ansprüche 1 bis 4, **dadurch gekennzeichnet, daß** das Verfahren kontinuierlich durchgeführt wird.

7. Verfahren nach einem der Ansprüche 1 bis 6, **dadurch gekennzeichnet, daß** die Carboxymethylcellulose nach der Reaktion isoliert und von den entstandenen Salzen und Nebenprodukten befreit wird.

## Claims

1. Process for the production of carboxymethylcellulose in which
a) cellulose is activated and
b) reacted with a carboxymethylation reagent,
**characterized in that** reaction step b) is carried out in an electromagnetic field having a frequency in the range from 10 MHz to 23 GHz.

2. Process according to claim 1, **characterized in that** reaction step b) is carried out in an electromagnetic field having a frequency of from 2 to 3 GHz.

3. Process according to claim 1 or 2, **characterized in that** a temperature range of 20°C to 150°C is employed in reaction step b).

4. Process according to any one of claims 1 to 3, **characterized in that** reaction step b) is carried out in the electromagnetic field for a reaction time of 1 to 120 minutes.

5. Process according to any one of claims 1 to 4, **characterized in that** the process is carried out discontinuously.

6. Process according to any one of claims 1 to 4, **characterized in that** the process is carried out continuously.

7. Process according to any one of claims 1 to 6, **characterized in that** the carboxymethylcellulose is isolated after the reaction and is freed from the salts and by-products produced.

## Revendications

1. Procédé pour la préparation d'une carboxyméthylcellulose dans lequel :
a) on active la cellulose et
b) on la fait réagir avec un réactif de carboxyméthylation,
ce procédé se caractérisant en ce que, au stade de réaction b), on opère dans un champ électromagnétique dont la fréquence se situe dans l'intervalle de 10 MHz à 23 GHz.

2. Procédé selon la revendication 1, **caractérisé en ce que**, au stade de réaction b), on opère dans un champ électromagnétique à une fréquence de 2 à 3 GHz.

3. Procédé selon la revendication 1 ou 2, **caractérisé en ce que**, au stade de réaction b), on opère dans l'intervalle de température de 20 à 150°C.

4. Procédé selon l'une des revendications 1 à 3, **caractérisé en ce que**, au stade de réaction b), on opère dans le champ électromagnétique dans une durée de réaction de 1 à 120 min.

5. Procédé selon l'une des revendications 1 à 4, **caractérisé en ce que** le procédé est mis en oeuvre en discontinu.

6. Procédé selon l'une des revendications 1 à 4, **caractérisé en ce que** le procédé est mis en oeuvre en continu.

7. Procédé selon l'une des revendications 1 à 6, **caractérisé en ce que**, après la réaction, on isole la carboxyméthylcellulose et on la débarrasse des sels et produits d'accompagnement formés.
